# EUROPÄISCHE PATENTSCHRIFT

(11) **EP 1 103 135 B1**
(45) Veröffentlichungstag und Bekanntmachung des Hinweises auf die Patenterteilung: **08.12.2004**
(21) Anmeldenummer: 99940145.8
(22) Anmeldetag: 04.08.1999
(51) Int. Cl.: H04M 3/42, H04Q 7/22, H04M 15/00

(54) **VERFAHREN ZUM ADMINISTRIEREN EINES DIENSTES FÜR EINEN TEILNEHMER**
METHOD FOR MANAGING A SERVICE FOR A SUBSCRIBER
ADMINISTRATION D'UN SERVICE POUR UN UTILISATEUR

(30) Priorität: 05.08.1998 EP 98114751
(43) Veröffentlichungstag der Anmeldung: 30.05.2001
(73) Patentinhaber: SIEMENS AKTIENGESELLSCHAFT, 80333 München (DE)
(72) Erfinder: ZYGAN-MAUS, Renate, D-81477 München (DE)
(86) Internationale Anmeldenummer: PCT/EP1999/005651
(87) Internationale Veröffentlichungsnummer: WO 2000/008835

(56) Entgegenhaltungen:
- EP-A- 0 602 779
- EP-A- 0 734 143
- EP-A- 0 738 093
- EP-A- 0 844 799
- WO-A-98/09425

## Beschreibung

Für die Nutzung eines FMC-Dienstes (FMC: Fixed-Mobile Converged) muß der Teilnehmer eindeutig identifiziert und autorisiert werden (z.B. um eine korrekte Vergebührung durchführen zu können). Bei Fixed-Mobile Converged Diensten wie z.B. PCS (Personal Communication Service) und CCS (Corporate Communication Service) verwendet der Dienstnutzer zeitweise ein mobiles Endgerät und zeitweise ein Festnetz-Endgerät.

Im Mobilfunknetz erfolgt die eindeutige Identifizierung des Teilnehmers automatisch über die SIM-Karte (SIM: Subscriber Identity Module). Auch im Festnetz könnte die Identifizierung des Teilnehmers automatisch erfolgen, wenn er ein dem FMC-Dienst administrativ bekanntes und dem Teilnehmer zugeordnetes Endgerät verwendet, und wenn das Festnetz die CallingLineIdentity (Anschlußnummer) dieses Festnetzendgerätes an die FMC-Dienstelogik liefert.

Bei Verwendung eines beliebigen Festnetzanschlusses (d.h. eines Festnetzanschlusses, der dem Teilnehmer nicht administrativ vom FMC-Dienst zugeordnet wurde) ist eine automatische Identifizierung des FMC-Teilnehmers nicht möglich. Aber auch am eigenen Festnetzendgerät ist eine Registrierung zur Verwendung dieses Endgerätes über einen speziellen FMC-Dienst nicht möglich, obwohl dies in bestimmten Fällen sinnvoll wäre (z.B. für Teleworker, wenn bestimmte Rufe von diesem Anschluß auf Kosten der Firma gehen sollen (CCS-Dienst)).

Das Festnetz unterstützt bisher die Benutzung fremder Anschlüsse auf eigene Kosten bzw. des eigenen Anschlusses auf Kosten eines Dritten bisher nur über die Möglichkeit, den Anrufer durch einen inband-Dialog zu identifizieren und zu authentisieren. Dazu muß der Anrufer (z.B. ein IN-Dienstteilnehmer) eine persönliche Identifikationsnummer (PIN) eingeben, die von der Dienstelogik mit im Netz gespeicherten Daten verglichen wird (z.B. bei Kreditkartendiensten oder bei UPT). Ein derartiger St dT ist z.B. aus dem Dokument EP-A-0 602 779 bekannt.

Aus dem Dokument WO 98 09425 A ist des weiteren ein System zur Behandlung von Calls bekannt, mit dessen Hilfe bei einer Initiierung eines Calls über ein Mobilnetzendgerät ein Festnetzendgerät angegeben werden kann, das für die Weiterführung des Calls benutzt werden soll.

Aus dem Dokument EP-A-0844 799 ist schließlich ein Kommunikationssystem zur Behandlung von Calls bekannt, mithilfe dessen ein Mobilnetzteilnehmer über sein Mobilnetzendgerät angeben kann, ob an ihn gerichtete Calls zu einem vorgebbaren Festnetzendgerät geroutet werden sollen.

Der Erfindung liegt die Aufabe zugrunde, die Benutzbarkeit eines Festnetzendgerätes über einen bestimmten Dienst für einen Mobilnetzteilnehmer zu erleichtern.

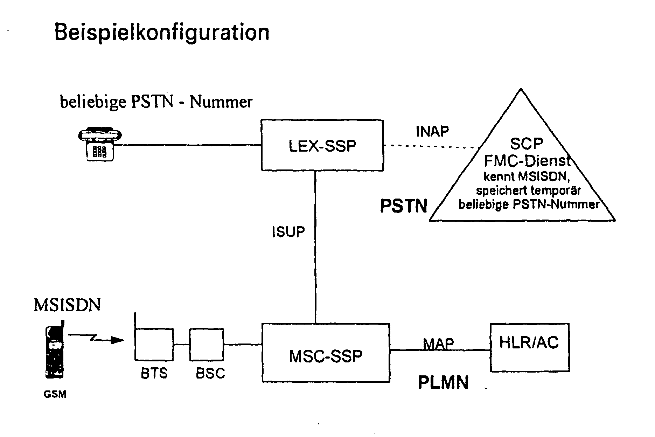

Im folgenden wird ein Ausführungsbeispiel der Erfindung anhand der Zeichnung näher erläutert, wobei die Zeichnung eine Figur umfaßt.

Die Figur stellt eine Beispielkonfiguration dar, in der die Realisierung der erfindungsgemäßen Dienstelogik auf einem Intelligenten Netz IN basiert. Ein erfindungsgemäßer FMC-Dienst muß aber nicht notwendigerweise auf einem Service Control Point SCP eines IN realisiert werden.

Bei einem FMC-Dienst, dessen Dienstlogik in einem Service Control Point SCP realisiert ist, steht dem Anrufer ein mobiles Telefon GSM zur Verfügung. Bei einem Zugang des Teilnehmers zum FMC-Dienst über das mobile Telefon erhält die FMC-Dienstelogik die Mobilfunkrufnummer MSISDN des FMC-Dienstteilnehmers, die der FMC-Dienstelogik administrativ bekannt ist und im Mobilfunknetz PLMN authentisiert wurde (z.B., bei einem IN-basierten FMC-Dienst wird die Mobilfunkrufnummer des FMC-Dienstteilnehmers in dem Parameter CallingPartyNumber des standardisierten IN-Protokolls übertragen, siehe ETSI Core INAP oder ITU-T Recommendations Q.1218/Q.1228 ). Die FMC-Dienstelogik kann den FMC-Teilnehmer automatisch anhand seiner Mobilfunkrufnummer identifizieren und autorisieren.
Dies kann für die Nutzung eines beliebigen Festnetzendgerätes in einem voll digitalen Festnetz PSTN, das die CallingLineIdentity überträgt, durch den Teilnehmer des FMC-Dienstes genutzt werden, um die Verwendung einer PIN zu vermeiden. Die Prozedur dafür ist wie folgt:

### Phase 1:

Der Teilnehmer wählt an seinem mobilen Telefon GSM einen FMC-Dienstzugangscode. Der Zugangswunsch wird gegebenenfalls über Netzgrenzen hinweg (hier von einem mobilen Netz PLMN über ein digitales Festnetz PSTN) zu dem FMC-Dienst weitergeleitet. Der FMC-Dienst identifiziert den Teilnehmer automatisch anhand seiner Mobilfunkrufnummer MSISDN. Der FMC-Dienst veranlaßt daraufhin, daß der Teilnehmer dem Dienst nunmehr eine Anschlußnummer eines Festnetzendgerätes mitteilen soll. Über Sprach- oder DTMF-Eingabe gibt der Teilnehmer die CallingLineIdentity des Festnetzendgerätes ein, das er für eine festlegbare Zeitdauer bzw. bis zur expliziten Deregistrierung für abgehende Gespräche oder andere leitungsvermittelte Dienste (z.B. Datenübertragung) auf seine Kosten nutzen möchte. Der FMC-Dienst registriert das Endgerät daraufhin und ordnet es dem Teilnehmer zu. Der FMC-Dienst kann optional dem Teilnehmer einen Auswahlcode mitteilen, der bei der Nutzung dieses Festnetzendgerätes zusätzlich zu verwenden ist (durch den Auswahlcode kann der Dienst zwischen mehreren erfindungsgemäßen Fremdnutzern des Festnetzendgerätes unterscheiden).

### Phase 2:

Der Teilnehmer wählt am Festnetzendgerät einen speziellen FMC-Dienstzugangscode und optional einen zusätzlichen temporären Selektionscode vor der Zielrufnummer. Im Festnetz wird auf die FMC-Dienstzugangsnummer getriggert und (z.B. mit den bestehenden IN-Prozeduren) eine Abfrage zur FMC-Dienstelogik gemacht. Diese identifiziert anhand der in einem voll digitalen Festnetz mitgelieferten CallingLineIdentity des in Phase 1 registrierten Festnetzendgerätes und optional zusätzlich anhand des temporären Selektionscodes in den gewählten Ziffern (INAP Parameter CalledPartyNumber) den FMC-Dienstteilnehmer und entscheidet auf der Basis des FMC-Dienstteilnehmerprofils über die weitere Behandlung des Rufes (z.B. Vergebührung). Die weitere Behandlung des Rufes steuert die FMC-Dienstelogik (z.B. entsprechend den bestehenden IN-Prozeduren). Die Kostenfreiheit des Festnetzanschlußinhabers kann aufgrund des gewählten speziellen FMC-Dienstzugangscodes in der Festnetzteilnehmervermittlungsstelle aufgrund von administrierten Daten sichergestellt werden, oder gesteuert durch die FMC-Dienstelogik (z.B. mit Hilfe bestehender IN-Prozeduren).

Der FMC-Dienstteilnehmer kann das registrierte Festnetzendgerät auch für nachfolgende Rufe in derselben Weise nutzen, ohne dafür eine eigene PIN zu benötigen, und zwar solange, bis eine Deregistrierung erfolgt.

### Phase 3:

Entweder automatisch nach Ablauf einer vorgebbaren Zeit und/oder durch eine explizite Deregistrierungsprozedur über das mobile Telefon verliert das benutzte Festnetzendgerät die Eigenschaft, vom FMC-Dienstteilnehmer auf seine Kosten benutzt werden zu können bzw. vom FMC-Dienstteilnehmer zu Lasten eines Dritten benutzt werden zu können. (Bei einer expliziten Deregistrierungsprozedur, die analog zur Registrierungsprozedur wieder über das Mobilnetzendgerät durchzuführen ist, überprüft der FMC-Dienst , ob für die vom Teilnehmer angegebene CallingLineIdentity eine Registrierung bereits vorliegt. Falls dies der Fall ist wird die Deregistrierung durchgeführt).

Die Verwaltung von teilnehmerindividuellen PINs für die Nutzung beliebiger Festnetzanschlüsse wird damit für FMC-Dienste überflüssig.

Auch andere FMC-Dienstteilfunktionen als das beschriebene Verfahren zur Nutzung beliebiger Festnetzanschlüsse können ohne die Verwendung einer PIN vom Teilnehmer administriert werden, wenn der Teilnehmer die Administration ausschließlich über sein Mobilfunktelefon durchführt. Die erforderliche Teilnehmeridentifizierung erfolgt durch das Mobilfunknetz in derselben Weise wie für das Verfahren zur Nutzung beliebiger Festnetzanschlüsse beschrieben. Damit kann generell bei FMC-Diensten auf teilnehmerindividuelle PINs verzichtet werden, wenn alle Teinehmereingaben zur Dienstadministration ausschließlich über sein Mobilfunktelefon erfolgen.

### Verwendete Abkürzungen:

- BTS :: Base Transceiver System
- BSC: : Base Station Controller
- HLR/AC :: Home Location Register / Authentication Center
- IN: : Intelligent Network.
- INAP: : IN Application Protocol
- ISUP: : ISDN User Part
- LEX-SSP:: Local Exchange mit SSP-Funktionalität
- MSC-SSP:: Mobil Switching Center mit SSP-Funktionalität
- MAP: : Mobile Application Part
- PSTN: : Public Switched Telephone Network
- PLMN: : Public Land Mobile Network
- SSP: : Service switching Point

## Patentansprüche

1. Verfahren zum Administrieren einer Funktion eines Dienstes, demgemäß
- eine Anforderung zum Administrieren der Funktion über ein Mobilnetzendgerät eines Mobilnetzteilnehmers entgegengenommen wird,
- der Mobilnetzteilnehmer daraufhin identifiziert wird,
- der Mobilnetzteilnehmer nach einer erfolgreichen Identifizierung darauf hingewiesen wird, dass dem Dienst zum Administrieren der Funktion nunmehr eine Anschlussnummer eines Festnetzendgerätes mitgeteilt werden soll,
- eine daraufhin mitgeteilte Anschlussnummer dem Mobilnetzteilnehmer zugeordnet wird,
- sodann die Behandlung eines von dem Festnetzendgerät über den Dienst initiierten Rufes, der mithilfe der Anschlussnummer des Festnetzendgerätes dem Mobilnetzteilnehmer zugeordnet wird, in Abhängigkeit des Profils des Mobilnetzteilnehmers gesteuert wird.

2. Verfahren nach Anspruch 1
**dadurch gekennzeichnet,**
**dass** dem Mobilnetzteilnehmer ein Auswahl-Code mitgeteilt wird, der bei der Nutzung des genannten Festnetzendgerätes über den Dienst zusätzlich zu verwenden ist.

3. Verfahren nach Anspruch 1 oder 2
**dadurch gekennzeichnet,**
**dass** automatisch nach Ablauf einer vorgebbaren Zeit und/oder durch eine explizite Deregistrierungsprozedur über das Mobilnetzendgerät das benutzte Festnetzendgerät deregistriert wird, wodurch es die Eigenschaft verliert, vom Mobilnetzteilnehmer gemäß seinem Profil benutzt werden zu können.

4. Dienststeuerungseinrichtung, derart ausgestaltet, dass sie
- eine Anforderung zum Administrieren einer Funktion des Dienstes über ein Mobilnetzendgerät eines Mobilnetzteilnehmers entgegennimmt,
- daraufhin den Mobilnetzteilnehmer identifiziert,
- den Mobilnetzteilnehmer nach einer erfolgreichen Identifizierung darauf hinweist, dass er ihr zum Administrieren der Funktion nunmehr eine Anschlussnummer eines Festnetzendgerätes mitteilen soll,
- eine daraufhin mitgeteilte Anschlussnummer dem Mobilnetzteilnehmer zuordnet,
- sodann die Behandlung eines von dem Festnetzendgerät über den Dienst initiierten Rufes, den sie mithilfe der Anschlussnummer des Festnetzendgerätes dem Mobilnetzteilnehmer zuordnet, in Abhängigkeit des Profils des Mobilnetzteilnehmers steuert.

5. Dienststeuerungseinrichtung nach Anspruch 4,
derart ausgestaltet,
dass sie dem Mobilnetzteilnehmer einen Auswahl-Code mitteilt, der bei der Nutzung des genannten Festnetzendgerätes über den Dienst zusätzlich zu verwenden ist.

6. Dienststeuerungseinrichtung nach Anspruch 4 oder 5,
derart ausgestaltet
dass sie automatisch nach Ablauf einer vorgebbaren Zeit und/oder durch eine explizite Deregistrierungsprozedur über das Mobilnetzendgerät das genannte Festnetzendgerät deregistriert, wodurch es die Eigenschaft verliert, vom Mobilnetzteilnehmer gemäß seinem Nutzer-Profil benutzt werden zu können.

## Claims

1. Method for administering a function of a service, according to which
- a request for administration of the function is accepted via a mobile terminal of a mobile network subscriber,
- the mobile network subscriber is then identified,
- after successful identification the mobile network subscriber is instructed that a number of a fixed network terminal should now be notified to the service for administering the function,
- a line number which is notified as a result is assigned to the mobile network subscriber,
- thereupon the handling of a call initiated by the fixed network terminal via the service, which is assigned with the aid of the number of the fixed network terminal to the mobile network subscriber is controlled depending on the profile of the mobile network subscriber.

2. Method in accordance with Claim 1
**characterized in that**,
the mobile network subscriber is notified of a selection code which is additionally to be employed via the service when said fixed network terminal is used.

3. Method in accordance with Claim 1 or 2,
**characterized in that**,
the fixed network terminal used is automatically deregistered after a specifiable period has elapsed and/or through an explicit deregistration procedure via the mobile network terminal, in which case it loses the characteristic of being able to be used by the mobile network subscriber in accordance with his profile.

4. Service control device, embodied such that it
- accepts a request for administration of a function of the service via a mobile network terminal of a mobile subscriber,
- subsequently identifies the mobile subscriber,
- Informs the mobile subscriber after successful identification that he should now notify the number of a fixed network terminal for administration of the function,
- assigns a subsequently notified line number to the mobile network subscriber,
- thereupon controls the handling of a call initiated by the fixed network terminal via the service, which is assigned with the aid of the number of the fixed network terminal to the mobile network subscriber depending on the profile of the mobile network subscriber.

5. Service control device in accordance with Claim 4,
configured such that,
it notifies the mobile network subscriber of a selection code which is additionally to be used via the service when said fixed network terminal is used.

6. Service control device in accordance with Claim 4 or 5, configured such that
it deregisters said fixed network terminal used after a specifiable period has expired and/or through an explicit deregistration procedure via the mobile network terminal, in which case it loses the characteristic of being able to be used by the mobile network subscriber in accordance with his user profile.

## Revendications

1. Procédé d'administration d'une fonction d'un service, selon lequel
- une demande d'administration de la fonction est prise en charge par l'intermédiaire d'un terminal du réseau mobile d'un abonné au réseau mobile,
- suite à quoi, l'abonné au réseau mobile est identifié,
- à l'issue d'une identification réussie, l'abonné au réseau mobile est averti du fait qu'un numéro de ligne d'un terminal du réseau fixe doit être à présent indiqué au service d'administration de la fonction,
- un numéro de ligne communiqué ensuite est associé à l'abonné au réseau mobile
- suite à quoi le traitement d'un appel initié par le terminal du réseau fixe par l'intermédiaire du service et qui est associé à l'abonné au réseau mobile à l'aide du numéro de ligne du terminal du réseau fixe est piloté en fonction du profil de l'abonné au réseau mobile.

2. Procédé selon la revendication 1,
**caractérisé en ce**
**qu'**un code de sélection, qui lors de l'utilisation du terminal du réseau fixe cité doit être utilisé en supplément par l'intermédiaire du service est indiqué à l'abonné au réseau mobile.

3. Procédé selon l'une quelconque des revendications 1 ou 2,
**caractérisé en ce que**
automatiquement à l'issue d'une durée prédéfinie et/ou par une procédure d'annulation explicite de l'enregistrement par l'intermédiaire du terminal mobile, l'enregistrement du terminal du réseau fixe est annulé, celui-ci perdant l'aptitude à pouvoir être utilisé par l'abonné au réseau mobile, en fonction de son profil.

4. Système de pilotage d'un service, conçu de façon à ce que
- il prend en charge une demande d'administration d'une fonction du réseau par l'intermédiaire du terminal mobile d'un abonné au réseau mobile,
- suite à quoi il identifie l'abonné au réseau mobile,
- à l'issue d'une identification réussie, il avertit l'abonné au réseau mobile qu'il doit lui communiquer à présent un numéro de ligne d'un terminal du réseau fixe pour l'administration de la fonction,
- il associe ensuite un numéro de ligne communiqué à l'abonné au réseau mobile,
- puis il pilote le traitement d'un appel initié par le terminal du réseau fixe par l'intermédiaire du service, qu'il associe à l'abonné au réseau mobile à l'aide du numéro de ligne du terminal du réseau fixe, en fonction du profil de l'abonné au réseau mobile.

5. Système de pilotage d'un service selon la revendication 4,
conçu de façon à ce que
il indique à l'abonné au réseau mobile un code de sélection, qui lors de l'utilisation du terminal du réseau fixe cité doit être utilisé en supplément, par l'intermédiaire du service.

6. Système de pilotage d'un service selon l'une quelconque des revendications 4 ou 5,
conçu de façon à ce que
à l'issue d'une durée prédéfinie et/ou par une procédure d'annulation explicite de l'enregistrement par l'intermédiaire du terminal mobile, il annule l'enregistrement du terminal du réseau fixe cité, celui-ci perdant ainsi son aptitude à pouvoir être utilisé par l'abonné au réseau mobile, en fonction de son profil d'abonné.
